## Europäisches Patentamt

## European Patent Office

## Office européen des brevets

(11) Veröffentlichungsnummer: **0 627 485 A1**

# EUROPÄISCHE PATENTANMELDUNG

(21) Anmeldenummer: **94108416.2**

(22) Anmeldetag: **01.06.94**

(51) Int. Cl.⁵: **C12G 3/08**, C12C 5/02

(30) Priorität: **02.06.93 EP 93108831**

(43) Veröffentlichungstag der Anmeldung:
**07.12.94 Patentblatt 94/49**

(84) Benannte Vertragsstaaten:
**BE CH DE FR LI NL**

(71) Anmelder: **Döhler GmbH**
**Riedstrasse 7-9**
**D-64295 Darmstadt (DE)**

(72) Erfinder: **Back, Professor Dr.**
**Riedstrasse 7 - 9**
**D-64295 Darmstadt (DE)**
Erfinder: **Tretzel, Joachim, Dr.**
**Riedstrasse 7 - 9**
**D-64295 Darmstadt (DE)**
Erfinder: **Kalko, Jürgen, Dr.**
**Bönnigheimer Str. 15**
**D-74074 Heilbronn (DE)**
Erfinder: **Neugebauer, Klaus**
**Rossbergring 53**
**D-64354 Reinheim/Zeilhard (DE)**
Erfinder: **Günther, Klaus**
**Ollenhauerstrasse 22**
**D-64354 Reinheim (DE)**

(74) Vertreter: **Meyers, Hans-Wilhelm, Dr. et al**
**Patentanwälte**
**von Kreisler-Selting-Werner**
**Postfach 10 22 41**
**D-50462 Köln (DE)**

(54) **Verfahren zur Entfernung von störenden Inhaltsstoffen aus fermentativ gewinnbaren Nahrungs- und/oder Genussmitteln.**

(57) Verfahren zur Entfernung von störenden Inhaltsstoffen aus fermentativ gewinnbaren Nahrungs- und/oder Genußmitteln unter Erhaltung das Aromaspektrums wertbestimmender Geruchs- und Geschmacksstoffe in verzehrfertigen Nahrungs- und/oder Genußmitteln, wobei man
- entweder die wertbestimmenden Geruchs- und/oder Geschmacksstoffe dem zu behandelnden Nahrungs- und/oder Genußmittel entzieht, danach den oder die störenden Inhaltsstoffe entfernt, danach die dem Nahrungs- und/oder Genußmittel entzogenen wertbestimmenden Geruchs- und/oder Geschmacksstoffe in an sich störenden Lösungsmitteln aufgenommen werden und dem Nahrungs- und/oder Genußmittel wieder zugefügt werden
- oder störende Inhaltsstoffe entfernt werden, wobei die dabei mit entzogenen wertbestimmenden Geruchs- und/oder Geschmacksstoffe separiert, in an sich störenden Lösungsmitteln aufgenommen werden und dem abgereicherten Nahrungs- und/oder Genußmittel wieder zugefügt werden.

Rank Xerox (UK) Business Services
(3.10/3.09/3.3.4)

Die Erfindung betrifft ein Verfahren zur Entfernung von störenden Inhaltsstoffen aus fermentativ gewinnbaren Nahrungs- und/oder Genußmitteln unter Erhaltung des Aromaspektrums wertbestimmender Geruchs- und Geschmacksstoffe in verzehrfertigen Nahrungs- und/oder Genußmitteln.

Es ist wünschenswert, störende Inhaltsstoffe aus fermentativ gewinnbaren Nahrungs- und/oder Genußmitteln zu entfernen, wobei die Aromaspektren der wertbestimmenden Geruchs- und Geschmacksstoffe im verzehrfertigen Nahrungs- und/oder Genußmittel erhalten bleiben sollen. So ist es beispielsweise wünschenswert, Bitterstoffe aus diesen Nahrungs- und Genußmitteln zu entfernen, die sich nachteilig auf den Geschmack auswirken. Als störender Inhaltsstoff ist insbesondere auch Alkohol in Bieren anzusehen, welche mit reduziertem Alkoholgehalt vertrieben werden. Der Stand der Lebensmitteltechnologie zur Entfernung von störenden Inhaltsstoffen wird anhand der Herstellungsverfahren von alkoholreduzierten oder alkoholfreien Bieren beschrieben.

Alkoholreduzierte (2 bis 2,5 Vol-% Ethanol) aber vor allem auch alkoholfreie Biere (kleiner 0,5 % Alkohol) haben in den letzten Jahren einen deutlichen Anteil des Biermarkts besetzen können.

Für die Alkoholreduktion, bzw. Alkoholentfernung aus Bier, gibt es im wesentlichen drei Methoden:

1. Reduktion bzw. Entfernung des Alkohols aus normalem Vollbier durch Anwendung von Membrantrennprozessen (Dialyse, Umkehrosmose).

2. Reduktion bzw. Entfernung des Alkohols aus normalem Vollbier durch Vakuumverdampfung des Alkohols.

3. Herstellung von alkoholfreien, bzw. alkoholarmen Schankbieren durch Verwendung von Würzen mit niedrigen Extraktgehalten und besondere Gärführung (gestoppte Gärung).

Alle Verfahren haben spezifische Vor- und Nachteile. So ist bei Verfahren nach Methoden 1 und 2 in Folge des normalen Extraktgehalts der verwendeten Würze und der normalen Gärführung eine im wesentlichen normale Vollmundigkeit sowie ein normales Aromaspektrum des daraus hergestellten alkoholfreien bzw. -reduzierten Produktes zu erwarten. Im Unterschied zu Membrantrennverfahren, die ohne jede Temperaturerhöhung des Ausgangsbieres arbeiten, ist bei Verfahren nach Methode 2 eine, wenn auch geringfügige Temperaturerhöhung zum Betrieb des Prozesses notwendig mit dem Nachteil der thermischen Belastung des Produktes.

Verfahren nach Methode 3 liefern weniger bierähnliche Produkte durch abweichende Gärführung bzw. von vornherein niedrigeren Extraktgehalt.

Allen Verfahren ist gemeinsam, daß die Produkte aromaschwächer ausfallen als gewöhnliches, normal alkoholhaltiges Bier. Bei Produkten aus Verfahren nach den Methoden 1 und 2 rührt dies aus einem teilweisen Verlust von Bieraromastoffen in Folge nicht vollständig selektiver Trennprozesse. Produkte nach Verfahren 3 haben a priori einen schwächeren und weniger biertypischen Aromaeindruck und Geschmack.

Die bei der Herstellung von alkoholreduziertem oder alkoholfreiem Bier auftretenden Probleme können sinngemäß auch bei anderen Nahrungsmittelherstellungsverfahren in Erscheinung treten.

Das der Erfindung zugrundeliegende technische Problem besteht darin, zunächst ein Verfahren zur Entfernung störender Inhaltsstoffe aus fermentativ gewinnbaren Nahrungs- und/oder Genußmittel bereitzustellen, das es erlaubt, das Aromaspektrum wertbestimmender Geruchs- und Geschmacksstoffe in dem verzehrfertigen Nahrungs- und/oder Genußmittel zu erhalten. Gleichzeitig soll es das Verfahren ermöglichen, aus dem Nahrungs- und/oder Genußmittel das typische Aroma zu isolieren unter möglichst authentischer Beibehaltung des typischen wertbestimmenden Aromaspektrums.

Das der Erfindung zugrundeliegende Problem wird durch ein Verfahren gelöst, welches die Merkmale des Anspruchs 1 aufweist. Die Unteransprüche 2 bis 12 betreffen bevorzugte Ausführungsformen des erfindungsgemäßen Verfahrens inklusive der Bereitstellung eines Verfahrens zur Herstellung der wertbestimmenden Geruchs- und/oder Geschmacksstoffe des entsprechenden Nahrungs- und/oder Geruchsmittels als Aromakonzentrate als Zwischenprodukte.

Beim erfindungsgemäßen Verfahren zur Entfernung von störenden Inhaltsstoffen aus fermentativ gewinnbaren Nahrungs- und/oder Genußmitteln unter der Erhaltung des Aromaspektrums wertbestimmender Geruchs- und Geschmacksstoffe in verzehrfertigen Nahrungs- und/oder Genußmitteln geht man entweder davon aus, daß die wertbestimmenden Geruchs- oder Geschmacksstoffe dem zu behandelnden Nahrungs- und/oder Genußmittel entzogen werden. Danach werden dann die störenden Inhaltsstoffe entfernt. Die dem Nahrungs- und/oder Genußmittel entzogenen wertbestimmenden Geruchs- und/oder Geschmacksstoffe, die in der vorherigen Verfahrensstufe dem Nahrungs- und/oder Genußmittel entzogen worden sind, werden in an sich störenden Lösungsmitteln aufgenommen und anschließend nach Entfernen des störenden Inhaltsstoffes oder der störenden Inhaltsstoffe dem Nahrungs- und/oder Genußmittel wieder zugefügt. Diese Vorgehensweise hat den Vorteil, daß die störenden Inhaltsstoffe aus dem aromaabgereicherten Nahrungs- und/oder Genußmittel auch unter recht drastischen Bedingungen entzogen werden können, ohne die chemisch oftmals recht labilen Geruchs- und/oder Geschmacksstoffe zu beschädigen.

In einer Verfahrensalternative werden zuerst die störenden Inhaltsstoffe entfernt, wobei gleichzeitig die wertbestimmenden Geruchs- und/oder Geschmacksstoffe abgetrennt werden. Die Geruchs- und/oder Geschmacksstoffe werden dann von der auch die störenden Inhaltsstoffe enthaltenden Fraktion abgetragen, konzentriert in an sich störenden Lösungsmitteln wieder aufgenommen und dem abgereicherten Nahrungs- und/oder Genußmittel wieder zugefügt.

In einer bevorzugten Ausführungsform des erfindungsgemäßen Verfahrens werden die störenden Inhaltsstoffe in den zu behandelnden Nahrungs- und/oder Genußmitteln von nicht positiv wertbestimmenden Geruchs- und/oder Geschmacksstoffen des betreffenden Nahrungs- und/oder Genußmittels befreit. Als fermentativ gewinnbare Nahrungs- und/oder Genußmittel kommen insbesondere Getränke, wie Biere, Weine, Spirituosen, Obstwässer; alkoholfreie oder -reduzierte Biere, Weine, Sekte, etc. in Betracht.

Störende Inhaltsstoffe sind im Sinne dieser Erfindung Stoffe, die nicht zu den positiv wertbestimmenden Stoffen des betreffenden Nahrungs- und/oder Genußmittels zählen. Bei den Getränken gehören dazu insbesondere Stoffe, wie Fuselöle, Bitterstoffe, etc. Dem Fachmann ist allgemein bekannt, daß ein störender Inhaltsstoff in einem bestimmten Nahrungs- und/oder Genußmittel durchaus wertbestimmend in einem anderen Nahrungs- und/oder Genußmittel sein kann. So kann beispielsweise bei gebrannten Genußmitteln die Anwesenheit von wenig Fuselölen interessant sein, wohingegen im Brauereiwesen Fuselöle zu den Aroma mitbestimmenden Faktoren gerechnet werden. Auf der anderen Seite ist beispielsweise ein in manchen Genußmitteln durchaus erwünschter Ethanolgehalt bei alkoholreduzierten oder alkoholfreien Bieren unerwünscht.

Erfindungsgemäß werden die störenden Inhaltsstoffe vorzugsweise durch adsorptive Maßnahmen, wie Festphasenextraktion, aus dem Nahrungs- und/oder Genußmittel entfernt. Als Mittel für die Festphasenextraktion kommen insbesondere feste und polare Chomatographiemedien mit hoher spezifischer Oberfläche in Frage. Dazu gehören eine Reihe von handelsüblichen Chromatographiematerialien, wie modifiziertes Kieselgel, Polypropylen, schwache Ionenaustauscherharze und Polypropylenoxid. Als besonders geeignet, haben sich an der Oberfläche modifizierte Chromatographiematerialien erwiesen, die mit 8 bzw. 18 Kohlenstoffatomen substituiert sind. Geeignete Handelsprodukte sind somit die modifizierten Kieselgele der Firma Merck, Darmstadt mit der Bezeichnung Reversed Phase Silica RP-8, bzw. RP-18, das Polypropylen-Pulver der Firma AKZO, Obernburg, welches unter der Bezeichnung Accurel vertrieben wird, das mit C18-Ketten modifizierte Chromatographiematerial Bioran der Firma Schott, Mainz, die Ionenaustauscherharze Dowex S 112 der Dow Chemicals und Amberlite XAD der Firma Rohm und Haas, Frankfurt sowie das Polypropylenoxid der Firma GE Plastics BV, NL.

Die an dem Festphasenträger adsorbierten Inhaltsstoffe werden insbesondere mittels Lösungsmitteln, die dem Nahrungs- und/oder Genußmitteln entweder zuvor als störendende Inhaltsstoffe entfernt wurden (in Beispielen der Herstellung von alkoholreduzierten oder alkoholfreien Bieren ist dies der Stoff Ethanol) oder als fremder Stoff zugesetzt werden, desorbiert und dem Nahrungs- und/oder Genußmittel nach Abreicherung des störenden Inhaltsstoffes wieder zugeführt werden. Als geeignete Desorptionsmittel kommen Stoffe, die nach dem Lebensmittelrecht unbedenklich sind, insbesondere niedere Alkohole, wie Ethanol oder Isopropanol oder Propylenglykol, in Frage.

Es hat sich als vorteilhaft herausgestellt, die Desorption der am Festphasenextraktionsmaterial adsorbierten Stoffe bei erhöhter Temperatur durchzuführen. Dabei kann das desorbierende Agens bereits vorgewärmt mit dem Festphasenextraktionsmaterial in Kontakt gebracht werden. Es ist auch möglich, während des Eluiervorgangs das Festphasenextraktionsmaterial zusammen mit dem Eluens zu erwärmen. Es hat sich ebenfalls als sinnvoll erwiesen, die Desorption der adsorbierten Stoffe unter vermindertem Druck durchzuführen. Die Maßnahmen können auch kombiniert werden. In einer bevorzugten Auführungsform wird die Menge des desorbierenden Mittels, beispielsweise Ethanol, das auch als störender Bestandteil des Nahrungs- und/oder Genußmittels angesehen werden kann, so gering wie möglich gehalten.

Das erfindungsgemäße Verfahren ist geeignet zur Herstellung alkoholfreier Biere, Bieraromen oder Weinaromen, Sektaromen sowie Obstwasseraromen und wird im folgenden anhand der Herstellung von alkoholfreien Bieren oder Bieren, deren Alkoholgehalt reduziert ist, erläutert.

Das erfindungsgemäße Verfahren geht davon aus, daß dem Bier vor der Alkoholabreicherung die wertbestimmenden Geruchs- und/oder Geschmacksstoffe (Bieraroma) entzogen werden. Das Aroma-abgereicherte Bier wird sodann einem Verfahren zur Alkoholabreicherung unterzogen und danach mit den vorher entzogenen Aromastoffen wieder versetzt. In einer weiteren Alternative können die bei der Alkoholentfernung anfallenden Alkohol-Aroma-Gemische oder die im Herstellungsprozeß des Bieres entstehenden aromahaltigen Fraktionen vom Bieraroma befreit werden, wobei das gewonnene Aroma anschließend wieder dem an Alkohol und Aroma abgereicherten Bier zugegeben wird. Als eigentliche alkoholabreichernde Operationen kommen destillative Operationen oder Verfahren wie Umkehrosmose und Dialyse in Frage.

Die wertbildenden Geruchs- und/oder Geschmacksstoffe werden vor der Entalkoholisierung durch Festphasenextraktion abgetrennt. Sie werden damit vor dem eventuell für sie verlustreichen destillativen oder extraktiven Entfernen des Alkohols mittels semipermeabler Membranen (Dialyse, Umkehrosmose, Perforation) bewahrt. Darüber hinaus werden sie im Vergleich zur Konzentration im Ausgangsmaterial weiter angereichert.

Der durch die verschiedenen Methoden aus dem Ausgangsmaterial entfernte wäßrige Alkohol wird konzentriert, um damit die Festphasen nach ihrer Sättigung, wie Geruchs- und Geschmacksstoffen zu eluieren. Zur Alkoholkonzentrierung bedient man sich zum Beispiel der klassischen Destillation und Rektifikation im Batch- oder kontinuierlichen Durchflußverfahren. Man bedient sich hierzu der bekannten Destillierblasen und - kolonnen, wie sie zur Alkoholgewinnung und -verstärkung üblich sind. Es sind möglichst hohe Alkoholkonzentrationen anzustreben, vornehmlich über 90 Vol.-%. Je höher nämlich die Konzentrierung des Alkohols ist, um so besser ist sein Lösungsvermögen für die auf der Festphase adsorbierten Geruchs- und Geschmacksstoffe. Auch wird durch eine höhere Grädigkeit die Kapazität des Alkohols für diese Geruchs- und Geschmacksstoffe gesteigert.

Die Kapazität des Festphasenmaterials zur Aufnahme von Geruchs- und/oder Geschmacksstoffen läßt sich durch Kälteeinwirkung steigern. Das Eluieren und die Desorption der Geruchs- und Geschmacksstoffe läßt sich durch Einwirkung von erwärmten Desorptionsmitteln steigern. Vorzugsweise wird das Festphasenextraktionsmaterial, an denen Geruchs- und/oder Geschmacksstoffe adsorbiert sind, mit erwärmten Alkohol behandelt. Dabei wird das Lösevermögen des Desorptionsmittels erhöht. Das Lösungsmittel, vorzugsweise wäßriger Alkohol oder hochkonzentrierter Alkohol, insbesondere absoluter Alkohol, kann durch bekannte Vorrichtungen, wie Platten- und Röhrenwärmetauscher aufgeheizt werden, bevor das Lösungsmittel mit der Festphase in Berührung kommt. Es ist aber auch möglich, die Vorrichtung, in der das Festphasenmaterial angeordnet ist (vorzugsweise in Form einer Säule) mit einem Heizmantel zu versehen oder, falls die Vorrichtung aus einem nichtmetallischen Werkstoff, beispielsweise Glas oder Teflon gefertigt wurde, mittels Mikrowelle aufzuheizen.

Als Desorptionsmittel der Geruchs- und/oder Geschmacksstoffe von der Festphase kommen ebenfalls Isopropanol und Propylenglykol in Frage. Das damit erhältliche Aromakonzentrat, eine Essenz aus konzentrierten Geruchs- und/oder Geschmacksstoffen kann dann dem Bier nach der Entalkoholisierung wieder zugesetzt werden. Diese Essenz (Bieraroma) kann jedoch auch zur Aromatisierung anderer Stoffe dienen.

Insbesondere in der Bundesrepublik ist das Lösen der Aromastoffe von der festen Phase mittels konzentriertem Ethanol lebensmittelrechtlich unproblematisch, wenn der zur Desorption verwendete Alkohol aus dem Bier und dem Gärprozeß selbst stammt. Ein weiterer Vorteil des Ethanols als Desorptionsmittel besteht in der Tatsache, daß dieses regelmäßig eine gute Lösekraft für die an der festen Phase adsorbierten Geruchs- und/oder Geschmacksstoffe aufweist, so daß die Essenz in hochkonzentrierter Form gewonnen werden kann. Dadurch wird die Menge des alkoholenthaltenden Bieraromas, welches dem entalkoholisiertem Bier wieder zugesetzt wird, so gering gehalten, daß der Alkoholgehalt des entalkoholisierten Biers nicht spürbar erhöht wird. Dieser Gehalt läßt sich ohne weiteres auf < 0,5 Vol.-% im alkoholreduzierten Bier einstellen. Es werden daher vorzugsweise hochprozentige alkoholhaltige wäßrige Lösungen, insbesondere mehr als 85 Vol.-% Ethanol im Wasser zur Festphasenextraktion eingesetzt. Ein weiterer Vorteil der hochkonzentrierten alkoholischen Lösungen besteht darin, daß der Alkohol dann eine höhere Flüchtigkeit im Vergleich zu den meisten wesentlichen Geruchs- und/oder Geschmacksstoffen alkoholischer Getränke aufweist. Mithin läßt sich der Alkohol wieder destillativ oder durch Rektifikation entfernen, um eine weitere Konzentrierung der Essenz zu erreichen. Dadurch wird es ermöglicht, den Alkohol des Desorptionsmittels zum Teil von den Geruchs- und/oder Gemacksstoffen destillativ vor der Dosage zum entalkoholisierten Bier abzutrennen. Somit steht der abdestillierte hochprozentige Alkohol wieder als Desorptionsmittel zur Verfügung. Er hat quasi die Funktion eines Schleppmittels für die Aromastoffe. Wegen des Vorliegens der Aromastoffe in nunmehr konzentrierter Form im Eluat und teilweisen Entfernung des Ethanols aus demselben, kann der Anstieg des Alkoholgehalts im fertigen Bier nach der Zudosage auch wesentlich kleiner als 0,5 Vol.-% gehalten werden.

Zur Vermeidung von thermischer Zersetzung oder Beschädigung der Aromastoffe, sollten höhere Temperaturen nur kurze Zeit auf den Desorptionsprozeß einwirken. Es kann daher vorteilhaft sein, Eluate durch nachgeschaltete Platten- oder Röhren-kühler zu kühlen oder Temperaturabsenkung durch unmittelbar nachfolgende Destillation und Rektifikation eventuell unter vermindertem Druck zu bewirken. Die erwünschte destillative Entfernung des Lösungsalkohols benötigt Verdampfungswärme, die dem Eluens entzogen wird und zur Abkühlung führt. Ist der Alkoholgehalt des Desorptionsmittels kleiner als 80 - 90 Vol.-%, so empfiehlt es sich, Ethanol mittels Pervaporation mit Kollagenmembranen anzureichern. Bei diesem Verfahren passiert das Wasser die semipermeable Membran. Dadurch werden der Alkohol und die darin gelösten Geruchs- und Geschmacksstoffe angereichert. Werden ca. 85. Vol.% Alkohol erreicht, ist das Gemisch destillierfähig, ohne daß größere Aromamengen verlorengehen, weil die Flüchtigkeit des Alkohols nunmehr deutlich höher ist als die der wertbestimmenden Aromastoffe. Diese Methode der kombinierten Festphasenextraktion mit anschließender Abdestillation des Eluens Ethanol läßt sich grundsätzlich auf alle wäßrig alkoholischen Getränke und Getränkekomponenten wie Biere, Weine Spirituosen, Obstsaft, etc. anwenden. Die besonderen Vorteile dieses Verfahrens seien am Beispiel der Herstellung alkoholarmer bzw. alkoholfreier Biere weiter erläutert.

Biere haben gewöhnlich Alkoholgehalte zwischen 3 - 7 Vol.-%. Zur Reduktion des Alkoholgehaltes in diesen Bieren zur Herstellung alkoholarmer oder alkoholfreier Biere kann dies durch Abdampfen, Abdestillieren und Rektifizieren des Alkohols aus dem Bier erreicht werden. Dazu verwendet man Verdampfertypen, wie Fallstrom- und Dünnfilmverdampfer, die große Verdampferoberflächen und kleine Kontaktzeiten ermöglichen, damit der Verdampfungsvorgang möglichst schnell vonstatten geht und die thermische Belastung klein bleibt. Zu diesem Zweck wird die Verdampfung auch unter reduziertem Druck durchgeführt. Bei diesen Prozessen ist es nicht zu vermeiden, daß ein Teil der für das Bieraroma wesentlichen Komponenten wegen seiner gegenüber dem stark verwäßerten Alkohol größeren Flüchtigkeit mit verdampft und somit dem entalkoholisiertem Bier verlorengeht. Wird jedoch das zu entalkoholisierende Bier in seiner Gesamtheit unter Vakuum destilliert und rektifiziert, um die Aromaverluste möglichst klein zu halten, so benötigt man hierzu eine voluminösere Apparatur, als wenn man den Gesamtvorgang unter Normaldruck ablaufen ließe. Trennt man die wärmeempfindlichen Aromastoffe vor der eigentlichen Entalkoholisierung jedoch ab, so kann zumindest die Rektifikation des anschließend abzudestillierenden Alkohols unter Normaldruck erfolgen, was mit wesentlich kleineren und einfacheren Kolonnen durchzuführen ist. Diese Verfahrensweise ist im erfindungsgemäßen Verfahren bevorzugt.

Des weiteren hat sich bei Durchführung des erfindungsgemäßen Verfahrens in vorteilhafter Weise ergeben, daß sich brauereieigene Rohstoffe als Quelle der Herstellung des Bieraromas, das dem entalkoholisierten Bier zugegeben werden kann, verwenden lassen. Als brauereieigene Rohstoffe sind insbesondere Vor- und Nachläufe der Filtration, Rück- und Restbiere, hefehaltige Würze und Geläger, bei der Regeneration von Aktivkohlefiltern anfallende Eluate, Dialysate aus Dialysemembranentalkoholisierungsverfahren oder Filtrate aus Osmoseentalkoholisierungsverfahren oder Gemische derselben anzusehen. Diese werden in Kontakt gebracht mit einem festen, unpolaren Chromatographiemedium mit hoher spezifischer Oberfläche. Die adsorbierten Substanzen werden mit einem wenig polaren Lösungsmittel wieder abgelöst und gesammelt.

Die zu verwendenden brauereieigenen Rohstoffe werden entweder einzeln oder in Gemischen mit dem Festphasenextraktionsmaterial behandelt. Nach dem Adsorptionsvorgang werden die adsorbierten Stoffe anschließend wieder desorbiert (eluiert). Insbesondere, wenn diese Rohstoffe getrennt zum Einsatz kommen, erhält man verschiedenartige Bieraromen, die dem jeweiligen Bedürfnis angepaßt, miteinander verschnitten zum Einsatz kommen können. Die so herstellbaren Bieraromen weisen allgemein eine so hohe Aufkonzentrierung gegenüber dem Bier auf, aus dem sie gewonnen wurden, daß das fertige Bieraroma dem Endprodukt, nämlich dem entalkoholisiertem Bier, in solchen Mengen zugegeben werden kann, daß der Alkoholgehalt des entalkoholisierten oder alkoholfreien Bieres tolerabel ist. Je nach Konzentration der Aromastoffe in der alkoholischen Phase kann ein Fertigbier mit < 0,1 % Alkoholgehalt hergestellt werden.

Die brauereieigenen Rohstoffe fallen zwangsläufig in den Brauereien an und werden im allgemeinen verworfen oder nur in geringer Menge mit Bier verschnitten. Obwohl diese Rohstoffe eine unterschiedliche Zusammensetzung haben und damit auch in dem mehr oder weniger großen Ausschnitt aus dem Spektrum der Bieraromen wirksame Substanzen enthalten, ist es erstaunlicherweise möglich, hiermit die Qualität des fertigen alkoholarmen oder alkoholfreien Bieres deutlich zu verbessern.

Zwar ist die chromatographische Isolierung und Anreicherung von polaren Aromastoffen aus verdünnten wäßrigen Lösungen an sich bekannt. Überraschend war jedoch, daß sich fast alle in der Brauerei anfallenden Rest- und Abfallmengen der Bierbereitung für die Isolierung biertypischer Aromastoffe eignen. Nicht vorhersehbar war weiterhin, daß es möglich ist, die Elution der gebundenen Aromastoffe aus der Säule mit aufkonzentriertem Gärungsalkohol der Entalkoholisierungsanlagen durchzuführen. Erst hierdurch wird das deutsche Reinheitsgebot voll erfüllt. Ein besonderer Vorteil des erfindungsgemäßen Verfahrens besteht weiterhin darin, daß die so gewonnenen Bieraromen sowohl als Konzentrat wie im fertigen Endprodukt über lange Zeit stabil sind und daher geeignet sind, alkoholfreies und alkoholreduziertes Bier sensorisch aufzuwerten.

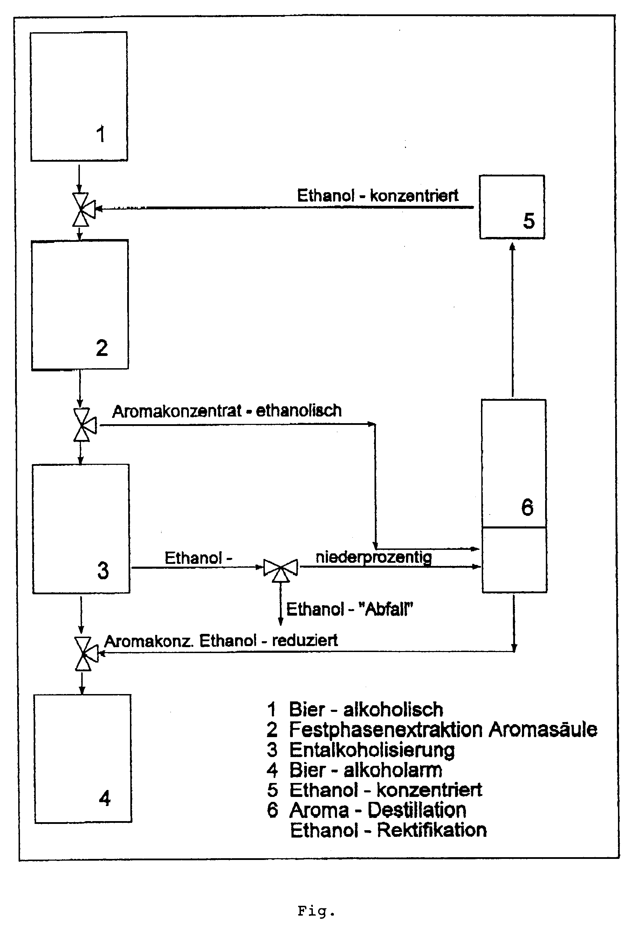

Die Figur zeigt ein Flußdiagramm einer besonders vorteilhaften Ausführungsform des erfindungsgemäßen Verfahrens zur Herstellung von alkoholfreien oder -reduzierten, durch Gärung erhältlichen Getränken am Beispiel der Herstellung von alkoholfreiem bzw. -reduziertem Bier.

Das in der Stufe 1 gewonnene Bier wird einer Festphasenextraktion in Stufe 2 (Aromasäule) ausgesetzt. Das aus der Festphasenextraktion austretende aromaabgereicherte Bier wird in Stufe 3 einer Entalkoholisierung unterzogen. Danach wird dieses Bier wieder mit Aromakonzentrat versetzt. Man erhält in Stufe 4 ein alkoholarmes oder alkoholfreies Bier mit seinem vollen Aromaspektrum. Die Aromasäule wird mit konzentrierter ethanolischer Lösung behandelt, um die an der festen Phase adsorptierten Geruchs- und Geschmacksstoffe zu eluieren. Die eluierte Fraktion wird abgezweigt und in Stufe 6 weiter aufkonzentriert. Das in Stufe 6 gewonnene Aromakonzentrat wird dann zwischen Stufen 3 und 4 dem alkoholreduzierten oder alkoholfreien Bier zugegeben, wohingegen das durch die Konzentrierung des vorläufigen ethanolischen Aromakonzentrats gewonnene Ethanol wieder dem Elutionsprozeß zugeführt wird. Die Ethanolentfernung aus dem ethanolischen Aromavorkonzentrat erfolgt entweder direkt destillativ bei Alkoholgehalten des Aromakonzentrates von > 80 bis 90 Vol.-%, oder bei entsprechend verdünnteren alkoholischen Lösungen erfolgt zunächst eine Pervaporation zur Entfernung von Wasser und damit zwangsläufig einhergehender Alkoholkonzentrierung, bis die genannten Konzentrationsgrade an Alkohol erreicht sind. Danach können diese Fraktionen ebenfalls einer Destillation oder Rektifikation unterzogen werden. Das beim Entalkoholisieren des aromaabgereicherten Bieres in Stufe 3 anfallende wäßrige ethanolische Gemisch kann in Stufe 6 ebenfalls in seinem Alkoholgehalt angereichert werden. Dieser Alkohol kann dann ebenfalls in den Aromaelutionskreislauf eingespeist werden oder, falls es dem Konzentrierungsprozeß nicht zugefügt wird, als ethanolischer Abfall verworfen werden.

Das erfindungsgemäße Verfahren erlaubt es, in einfacher Weise auch Bieraromen als Zwischenprodukte zu gewinnen. In analoger Weise lassen sich auch andere Aromen, wie Weinaromen oder Aromen aus Obstwässern gewinnen.

Die Gewinnung von Bieraromen gemäß dem erfindungsgemäßen Verfahren wird anhand der folgenden Beispiele näher erläutert.

Beispiel 1

Permeat aus der Bierentalkoholisierung mittels Dialyse wird mit Wasser auf einen Alkoholgehalt von < 3 Vol% verdünnt. Dieser Rohstoff wird über eine Chromatographie-Säule gepumpt, die mit modifiziertem Kieselgel (Reversed Phase Silica RP-8 der Firma Merck, Darmstadt) gefüllt ist. Der größte Teil der Bieraromakomponenten wird dabei adsorptiv an Kieselgel gebunden. Nach Erreichen der Sättigung der Säule wird mit 0,5 bis 5 l/kg Kieselgel 80 Vol%igen Gärungsalkohols desorbiert. Dieses Bieralkoholkonzentrat wurde auf die folgenden Bierinhaltstoffe analysiert:
a) Dimethylsulfid (DMS)
b) Diacetyl
c) höhere Alkohole und Ester
d) Bieraromastoffe
e) Würzearomastoffe
f) Alterungskomponenten.

Zum Vergleich wurde ein Standardbier (Pils) untersucht. Für die höheren Alkohole und Ester sowie die Bieraromastoffe sind aus der Literatur Vergleichswerte für die Konzentration im Bier und die Aromaeindrükke bekannt (Eßlinger, H.M. (1991): Brauwelt 10, Seiten 341 bis 342; Narziß, L. (1986): Abriß der Bierbrauerei). Das Ergebnis dieser Untersuchung ist in der später folgenden Tabelle zusammengestellt.

Beispiel 2

Als Ausgangsmaterial wird verwendet Gelägerhefesuspension, d.h. Bierhefe, die während der Lagerung und Reifung des Bieres aussedimentiert. Diese Suspension wird zuvor zentrifugiert (ca. 10.000 g) und mit Wasser bis zu einem Alkoholgehalt < 3 Vol% verdünnt und über ein Tiefenfilter K150 (Firma Seitz) Kieselgur filtriert. Dieser Rohstoff wird wie im Beispiel 1 an das modifizierte Kieselgel gebunden und anschließend wieder mit 80 Vol%igem Gärungsalkohol desorbiert. Eine Probe hiervon wurde wiederum auf die Bierinhaltstoffe analysiert. Die Ergebnisse mit den Konzentraten (Konzentrat A aus Dialysat, Konzentrat B aus Gelägerhefe) sind in der nachfolgenden Tabelle zusammengestellt.

|  | Standardbier | Konzentrat A | Konzentrat B |
|---|---|---|---|
| a) DMS (µg/l) | 85 | 48 | 56 |
| b) Diacetyl (µg/l) | 42 | 124 | 184 |

c), d) Höhere Alkohole und Ester, Bieraromastoffe

| Probenbezeichnung: | Standard-bier | Konzentrat A (1:100 verd.) | Konzentrat B (1:100 verd.) | |
|---|---|---|---|---|
| Propanol-1 | 8,37 | 0,10 | 0,18 | mg/l |
| Iso-Butanol | 8,87 | 0,17 | n.n. | mg/l |
| Methyl-Butanol-1 | 11,92 | 0,72 | 0,23 | mg/l |
| Iso-Amylalkohol | 44,00 | 2,55 | 0,76 | mg/l |
| | | | | |
| Hexanol-1 | 11,38 | 5,21 | 11,84 | µg/l |
| Heptanol-1 | 17,25 | 46,37 | 85,47 | µg/l |
| Octanol-1 | 16,25 | 19,17 | 39,10 | µg/l |
| Decanol-1 | 5,54 | 0,42 | 11,57 | µg/l |
| | | | | |
| 2-Phenylethanol | 15,91 | 0,79 | 1,30 | mg/l |
| Furfurylalkohol | 2,17 | 0,04 | 0,27 | mg/l |
| Ethylacetat | 26,98 | 1,16 | 0,82 | mg/l |
| Iso-Butylacetat | 0,05 | 0,01 | 0,01 | mg/l |
| Iso-Amylacetat | 2,63 | 0,41 | 0,17 | mg/l |
| Hexylacetat | 8,76 | 10,66 | 6,54 | µg/l |
| Heptylacetat | 4,63 | 2,53 | 2,54 | µg/l |
| Octylacetat | 6,33 | n.n. | n.n. | µg/l |
| Furfurylacetat | 5,65 | 1,79 | n.n. | µg/l |
| 2-Phenylethylacetat | 0,44 | 0,08 | 0,06 | mg/l |
| Ethyllactat | 0,09 | 0,04 | 0,07 | mg/l |
| Ethylbutyrat | 0,11 | 0,05 | 0,02 | mg/l |
| Ethylcapronat | 0,18 | 0,06 | 0,07 | mg/l |
| Ethylcaprylat | 0,25 | 0,18 | 0,48 | mg/l |
| Ethylcaprinat | 0,04 | 0,02 | 0,18 | mg/l |
| Ethyllaurinat | n.n. | 1,30 | n.n. | µg/l |
| Buttersäure | 0,03 | 0,14 | 0,03 | mg/l |
| Isovaleriansäure | 0,48 | n.n. | 0,08 | mg/l |
| Capronsäure | 1,17 | 0,03 | 0,34 | mg/l |
| Caprylsäure | 4,31 | 1,01 | 4,07 | mg/l |
| Pelargonsäure | 0,02 | 0,01 | 0,10 | mg/l |
| Caprinsäure | 0,59 | 0,11 | 1,70 | mg/l |
| 9-Decensäure | 0,02 | 0,02 | 0,29 | mg/l |

| Laurinsäure | 0,06 | 0,02 | 0,09 | mg/l |
|---|---|---|---|---|
| Linalool | 17,11 | 32,17 | 19,57 | µg/l |
| Nerol | n.n. | 1,78 | 20,07 | µg/l |
| Geraniol | 15,67 | 1,74 | 3,31 | µg/l |
| gamma-Nonalacton | 33,84 | 17,82 | 306,10 | µg/l |
| 2-Acetyl-Pyrrol | 23,09 | 8,54 | 4,87 | µg/l |

e) Würzearomastoffe

| Probenbezeichnung: | Standard-bier | Konzentrat A (1:100 verd.) | Konzentrat B (1:100 verd.) | |
|---|---|---|---|---|
| 3-Methyl-Butanal * | 23,4 | 2,4 | 6,6 | µg/l |
| 2-Methyl-Butanal * | 17,1 | 2,4 | 4,2 | µg/l |
| 1-Penten-3-ol | n.n. | n.n. | n.n. | µg/l |
| 2-Pentanon | 14,8 | 3,7 | 2,3 | µg/l |
| Pentanal | 1,2 | 1,4 | 1,8 | µg/l |
| 1-Hexen-3-ol | n.n. | n.n. | n.n. | µg/l |
| 2-Hexanon | 0,3 | 0,9 | 3,2 | µg/l |
| Hexanal | 116,8 | 39,9 | 20,8 | µg/l |
| Furfural * | 44,8 | n.n. | n.n. | µg/l |
| trans-2-Hexenal | 5,2 | 0,2 | n.n. | µg/l |
| trans-Hexen-2-ol | 1,0. | n.n. | 1,8 | µg/l |
| 2-Heptanon | 0,4 | 0,5 | 1,3 | µg/l |
| Heptanal | 2,6 | 0,4 | 1,5 | µg/l |
| 2-Acetyl-Furan * | n.n. | n.n. | n.n. | µg/l |
| Isobutyl-Isobutyrat | 1, | 0,5 | 0,3 | µg/l |
| alpha-Pinen | 3,4 | 4,1 | 8,1 | µg/l |
| 4,4-Dimethyl-But-2-en-olid | 21,9 | 1,1 | 8,1 | µg/l |
| trans-2-Heptenal | 9,8 | 2,2 | n.n. | µg/l |
| Benzaldehyd | 2,7 | 1,2 | 23,9 | µg/l |
| 5-Methyl-Furfural | n.n. | 2,1 | 0,9 | µg/l |
| Hexansäuremethylester | 7,1 | n.n. | 0,9 | µg/l |
| beta-Pinen | 2,2 | n.n. | 1,7 | µg/l |
| 4,4-Dimethyl-Butan-1,4-olid | 29,8 | 10,4 | 21,2 | µg/l |
| Myrcen | 16,8 | 5,2 | 15,3 | µg/l |
| Octanal | 1,9 | n.n. | 1,1 | µg/l |
| 2-Acetyl-Thiazol * | n.n. | n.n. | n.n. | µg/l |
| Limonen | 4,6 | 306,5 | 29,6 | µg/l |

| | | | | |
|---|---|---|---|---|
| Benzylalkohol | 12,5 | n.n. | 3,1 | μg/l |
| Phenylacetaldehyd * | 101,2 | 39,9 | 13,6 | μg/l |
| trans-2-Octenal | n.n. | n.n. | n.n. | μg/l |
| gamma-Hexalacton | 5,0 | 3,6 | 33,5 | μg/l |
| cis-Linalyloxid | 0,8 | 14,9 | 6,4 | μg/l |
| trans-Linalyloxid | 0,4 | 0,7 | 0,4 | μg/l |
| 2-Nonanon | 0,9 | 2,5 | 1,6 | μg/l |
| Octansäuremethylester | 25,40 | 1,16 | 1,81 | mg/l |
| trans-2-Nonenal | 0,9 | 1,4 | n.n. | μg/l |
| Phenylessigsäure-ethylester | 1,1 | n.n. | n.n. | μg/l |
| alpha-Terpineol | 231,4 | n.n. | 0,6 | μg/l |
| 2-Decanon | 5,5 | 149,6 | 347,3 | μg/l |
| Nonansäuremethylester | 0,2 | 1,8 | 1,5 | μg/l |
| Citronellol | 3,2 | 2,1 | 5,0 | μg/l |
| gamma-Octalacton | 9,6 | 4,5 | 16,3 | μg/l |
| 2-Undecanon | 1,1 | 2,2 | 3,6 | μg/l |
| Decansäuremethylester | 1,5 | 0,7 | 0,7 | μg/l |
| 2-Dodecanon | 0,7 | 6,5 | 7,9 | μg/l |
| beta-Caryophyllen | 0,7 | n.n | 0,9 | μg/l |
| Aromadendren | n.n. | 0,2 | 0,5 | μg/l |
| alpha-Humulen | n.n. | n.n | n.n | μg/l |
| gamma-Decalacton | 10,5 | 15,0 | 5,7 | μg/l |
| 2-Tridecanon | 1,5 | 1,1 | 0,7 | μg/l |
| cis-Nerolidol | 1,9 | 0,8 | 0,8 | μg/l |
| Dihydroactin | 34,6 | 12,0 | 7,6 | μg/l |
| trans-Nerolidol | 2,7 | 2,0 | 3,6 | μg/l |
| Caryophyllenoxid | n.n. | n.n. | 0,2 | μg/l |
| Humulenepoxyd I | 12,5 | 3,2 | 2,0 | μg/l |
| Humulenepoxyd II | 8,5 | 2,5 | 4,0 | μg/l |
| Humulenol | 14,1 | 14,4 | 6,8 | μg/l |

* typische Würzearomastoffe

9

| f) Alterungskomponenten | | | |
|---|---|---|---|
| Probenbezeichnung: | Standardbier | Konzentrat A (1:50 verd. ) | Konzentrat B (1:50 verd. ) |
| Essigsäurefurfurylester | 3,37 | 1,90 | n.n. $\mu$g/l |
| 5-Methylfurfural | 1,99 | 3,13 | 11,81 $\mu$g/l |
| 2-Propionylfuran | n.n. | 34,70 | n.n. $\mu$g/l |
| 2-Acetyl-5-Methylfuran | n.n. | n.n. | n.n. $\mu$g/l |
| 2-Acetyl-5-Methylfuran (Isomer) | 5,23 | 0,64 | 1,69 $\mu$g/l |
| gamma-Decalacton | 2,47 | 25,21 | 6,29 $\mu$g/l |
| 3-Methylbutanal | 12,32 | 2,22 | 8,60 $\mu$g/l |
| 3-Methylbutan-2-on | 3,36 | 5,24 | 15,55 $\mu$g/l |
| 2-Methylbutanal | 8,89 | 27,84 | 38,45 $\mu$g/l |
| 2-Furfural * | 51,81 | n.n. | 22,21 $\mu$g/l |
| Heptanal | 1,16 | 0,74 | 1,82 $\mu$g/l |
| 2-Acetylfuran | 2,88 | 0,85 | 1,12 $\mu$g/l |
| Benzaldehyd | 1,01 | 1,56 | 21,29 $\mu$g/l |
| 2-Phenylethanal * | 28,75 | 22,98 | 7,41 $\mu$g/l |
| Bernsteinsäurediethylester | 0,53 | n.n. | n.n. $\mu$g/l |
| Nicotinsäureethylester * | 41,39 | 6,20 | 45,97 $\mu$g/l |
| gamma-Octalacton | 1,70 | 9,29 | 46,73 $\mu$g/l |
| gamma-Nonalacton * | 49,83 | 29,07 | 181,28 $\mu$g/l |
| Dihydroactinidiolid | 40,38 | 29,80 | 23,11 $\mu$g/l |
| trans-Nerolidol | 4,55 | 1,31 | 7,14 $\mu$g/l |

* typische Alterungskomponenten

Beispiel 3

Die Konzentrate A und B wurden im Verhältnis 5:2 in Mengen von 0,5 bis 0,7 g/l alkoholfreien Bieren zugesetzt. Geprüft wurde

a) die optimale Konzentration dieses Gemisches und

b) die Stabilität.

Als alkoholfreie Biere wurden drei handelsübliche Markenbiere verwendet. Die Ergebnisse sind in der nachfolgenden Tabelle zusammengestellt.

| Bier 1: | Sensorische Ergebnisse |
|---|---|
| 14 Tage kühl ohne Zusatz<br>a) 14 Tage kühl, Optimum: 0,5 g/l | würzeartig, breit<br>weniger würzeartig, schlanker, eindeutige Verbesserung des Biergeschmacks |
| Bier 2: | |
| 14 Tage kühl ohne Zusatz<br>a) 14 Tage kühl, Optimum: 0,7 g/l<br><br>b) 14 Tage 20°C + 0,7 g/l Konz.-Gemisch | würzeartig, breit<br>weniger würzeartig, schlanker, genehme Bittere, etwas Hopfenaroma, bierähnlich<br>leicht spelzig, weniger würzeartig, (vor allem im Geruch), im Trunk kaum Unterschied zu a) |
| Bier 3: | |
| 14 Tage kühl ohne Zusatz<br>a) 14 Tage kühl, Optimum: 0,5 g/l<br><br>b) 14 Tage 20°C, + 0,5 g/l | malzig, etwas würzeartig, fremdartig,<br>Geruch: deutlich verbessert, feiner; Trunk: runder, angenehmer, weniger würzeartig, vollmundiger<br>kaum Unterschied zu a) |

Diese Ergebnisse zeigen, daß durch Zusatz des Gemisches der beiden Konzentrate eine sensorische Verbesserung der alkoholfreien Biere erfolgte. Außerdem zeigen diese Ergebnisse, daß diese Konzentrate auch bei einer Lagerung von 20°C stabil sind und dadurch die sensorische Verbesserung auch im fertigen Bier über längere Zeit erhalten bleibt.

Beispiel 4

Laborversuche mit folgenden Chromatographiematerialien ergaben vergleichbar gute Ergebnisse:
- modifiziertes Kieselgel mit 18 C-Atomen, Reversed Phase Silica RP-18 der Firma Merck, Darmstadt
- Accurel-Polypropylen-Pulver der Firma AKZO, Obernburg
- Bioran - CPG der Firma Schott, Mainz Modifizierte Oberfläche (C18)
- Dowex S 112 der Firma Dow Chemicals
- Amberlite XAD der Firma Rohm und Haas, Frankfurt
- PPO der Firma GE Plastics BV, NL

Desorptionsversuche mit anderen Alkoholkonzentrationen ergaben, daß optimale Ergebnisse im Bereich zwischen 70 und 96 Vol% erzielt werden. Weiterhin kann die Desorption auch mit Isopropanol erfolgen, somit kann ein derartiges Konzentrat auch in Länder verkauft werden, in denen der Import von ethanolischen Extrakten auf Schwierigkeiten stößt. Somit können derartige Konzentrate auch in Ländern hergestellt und gehandelt werden, in denen jeglicher Konsum von Ethanol verboten ist.

**Patentansprüche**

1.  Verfahren zur Entfernung von störenden Inhaltsstoffen aus fermentativ gewinnbaren Nahrungs- und/oder Genußmitteln unter Erhaltung das Aromaspektrums wertbestimmender Geruchs- und Geschmacksstoffe in verzehrfertigen Nahrungs- und/oder Genußmitteln, wobei man
    - entweder die wertbestimmenden Geruchs- und/oder Geschmacksstoffe dem zu behandelnden Nahrungs- und/oder Genußmittel entzieht, danach den oder die störenden Inhaltsstoffe entfernt, danach die dem Nahrungs- und/oder Genußmittel entzogenen wertbestimmenden Geruchs- und/oder Geschmacksstoffe in an sich störenden Lösungsmitteln aufgenommen werden und dem Nahrungs- und/oder Genußmittel wieder zugefügt werden
    - oder störende Inhaltsstoffe entfernt werden, wobei die dabei mit entzogenen wertbestimmenden Geruchs- und/oder Geschmacksstoffe separiert, in an sich störenden Lösungsmitteln aufgenommen werden und dem abgereicherten Nahrungs- und/oder Genußmittel wieder zugefügt werden.

2.  Verfahren nach Anspruch 1, wobei die störenden Inhaltsstoffe in den zu behandelnden Nahrungs- und/oder Genußmitteln nicht positiv wertbestimmende Geruchs- und/oder Geschmacksstoffe des betreffenden Nahrungs- und/oder Genußmittels sind.

3.  Verfahren nach Anspruch 1 und/oder 2, wobei das fermentativ gewinnbare Nahrungs- und/oder Genußmittel Getränke wie Biere, Weine Spirituosen oder alkoholfreie oder - reduzierte Biere, Weine, Sekte etc. sind.

4.  Verfahren nach mindestens einem der Anprüche 1 bis 3, wobei die störenden Inhaltsstoffe durch adsorptive Maßnahmen wie Festphasenextraktion aus dem Nahrungs- und/oder Genußmittel entfernt werden.

5.  Verfahren nach mindestens einem der Ansprüche 1 bis 4, wobei die adsorptiv gebundenen Inhaltsstoffe mittels Lösungsmitteln, die dem Nahrungs- und/oder Genußmittel entweder zuvor als störender Inhaltsstoff entfernt wurden oder als fremder Stoff zugesetzt werden, desorbiert werden und dem Nahrungs- und/oder Genußmittel zugeführt werden.

6.  Verfahren nach mindestens einem der Anprüche 1 bis 5, wobei die Desorption mit Alkoholen wie Ethanol, Propylenglykol oder Isopropanol erfolgt.

7.  Verfahren nach mindestens einem der Anprüche 1 bis 6, wobei die Desorption der adsorbierten Stoffe bei erhöhter Temperatur erfolgt.

8.  Verfahren nach mindestens einem der Anprüche 1 bis 7, wobei die zur Desorption der adsorbierten Inhaltsstoffe verwendete Lösungsmittelmenge so gering wie möglich bemessen ist.

**9.** Verfahren nach Anspruch 6 zur Herstellung alkoholfreier Biere, Bieraromen oder Weinaromen, Sektaromen sowie Obstwasseraromen.

**10.** Verfahren nach mindestens einem der Ansprüche 1 bis 9, wobei zur Herstellung von alkoholfreien oder alkoholreduzierten Bieren, Weinen, Sekt oder Obstwässern entweder
- dem Bier, Wein, Sekt oder Obstwasser vor der Alkoholabreicherung Inhaltsstoffe wie wertbestimmende Geruchs- und/oder Geschmacksstoffe (Bieraroma, Weinaroma, Sektaroma oder Obstwasseraroma) entzogen werden, das aromaabgereicherte Getränk Verfahren zur Alkoholabreicherung unterzogen wird und danach mit dem vorher entzogenen Aromastoffen wieder versetzt wird oder
- das bei der Alkoholentfernung anfallende Gemisch oder im Herstellungsprozeß des Bieres, Weines, Sektes oder Obstwassers anfallende aromahaltige Fraktionen vom Aroma befreit werden, das gewonnene Aroma anschließend wieder dem an Alkohol und Aroma abgereicherten Bier, Wein, Sekt oder Obstwasser zugegeben wird.

**11.** Verfahren nach Anspruch 10, wobei die Alkoholabreicherung durch destillative Operationen oder durch Umkehrosmose erfolgt.

**12.** Verfahren nach einem der Ansprüche 10 und/oder 11, wobei das zu behandelnde Bier, Wein, Sekt oder Obstwasser über eine Säule gegeben wird, in der eine feste Phase angeordnet ist, die die Aromastoffe zu adsorbieren vermag, das entaromatisierte Bier, Wein, Sekt oder Obstwasser aufgefangen wird, die Säule mit konzentrierter ethanolischer Lösung oder Ethanol behandelt wird, um die adsorbierten Aromastoffe zu desorbieren, das entaromatisierte Bier, Wein, Sekt oder Obstwasser vom Alkohol befreit wird, dieser Alkohol in einem Aromastoffdesorptionskreislauf einspeisbar ist, das ethanolische Aromakonzentrat ggf. weiter konzentriert wird, das dem Bier, Wein, Sekt oder Obstwasser entzogene Ethanol destillativ weiter konzentriert wird, um in den Aromastoffdesorptionkreislauf eingespeist zu werden, woraufhin das ggf. angereicherte Aromakonzentrat dem alkoholabgereicherten Bier, Wein, Sekt oder Obstwasser wieder zugefügt wird.

Ethanol - konzentriert

Aromakonzentrat - ethanolisch

Ethanol -   niederprozentig

Ethanol - "Abfall"

Aromakonz. Ethanol - reduziert

1 Bier - alkoholisch
2 Festphasenextraktion Aromasäule
3 Entalkoholisierung
4 Bier - alkoholarm
5 Ethanol - konzentriert
6 Aroma - Destillation
   Ethanol - Rektifikation

Fig.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.5) |
|---|---|---|---|
| Y | FR-A-2 106 755 (E. ZIEGLER) 5. Mai 1972 * Ansprüche * --- | 1-3 | C12G3/08 C12C5/02 |
| Y | AMERICAN SOCIETY OF BREWING CHEMISTS JOURNAL. Bd. 45, Nr. 1 , 1987 , ST. PAUL, MN Seiten 23 - 27 D. B. HAWTHORNE ET AL. 'Determination of low molecular weight organic compounds in beer using capillary gas chromatography.' * das ganze Dokument * --- | 1-3 | |
| Y | JOURNAL OF AGRICULTURAL AND FOOD CHEMISTRY Bd. 41, Nr. 5 , Mai 1993 , WASHINGTON, US Seiten 777 - 780 N. ABBOTT ET AL. 'Evaluation of the representativeness of the odor of beer extracts prior to analysis by GC eluate sniffing.' * Seite 777, Spalte 1, Absatz 1 - Spalte 2, Absatz 6 * * Seite 779, Spalte 1, Absatz 3 * * Seite 779, Spalte 2, Absatz 3 -Absatz 4 * --- | 1-3 | |
| Y | EP-A-0 486 345 (CECA S.A.) * Seite 3, Zeile 4 - Zeile 36 * --- | 1-3 | |
| A | DE-A-24 05 543 (MERCK PATENT GMBH) 14. August 1975 ----- | | |

**RECHERCHIERTE SACHGEBIETE (Int.Cl.5)**

C12G
C12C

Der vorliegende Recherchenbericht wurde für alle Patentansprüche erstellt

| Recherchenort | Abschlußdatum der Recherche | Prüfer |
|---|---|---|
| DEN HAAG | 13. September 1994 | Bevan, S |

EPO FORM 1503 03.82 (P04C03)